# EUROPEAN PATENT SPECIFICATION

(11) **EP 4 077 932 B1**
(45) Date of publication and mention of the grant of the patent: **18.06.2025**
(21) Application number: 19827618.0
(22) Date of filing: 19.12.2019
(51) Int. Cl.: F03D 13/10

(54) **A METHOD FOR INSTALLING OR REMOVING WIND TURBINE COMPONENTS**
VERFAHREN ZUM INSTALLIEREN ODER ENTFERNEN VON WINDTURBINENKOMPONENTEN
PROCÉDÉ D'INSTALLATION OU DE RETRAIT DE COMPOSANTS D'ÉOLIENNE

(43) Date of publication of application: 26.10.2022
(73) Proprietor: VESTAS WIND SYSTEMS A/S, 8200 Aarhus N (DK)
(72) Inventor: MØLLER MADSEN, Niels, 8000 Aarhus C (DK); KOFMAN, Joris, 9220 Aalborg Ø (DK); PETERSEN, Henrik, 8700 Horsens (DK)
(74) Representative: Vestas Patents Department
(86) International application number: PCT/DK2019/050412
(87) International publication number: WO 2021/121492

(56) References cited:
- EP-A1- 3 077 666
- EP-A1- 3 404 259
- EP-A1- 3 786 448
- CN-A- 108 190 725
- US-A1- 2018 335 023

## Description

### TECHNICAL FIELD

The present invention relates to a method for installing or removing components of a wind turbine.

### BACKGROUND INFORMATION

A horizontal axis wind turbine is known to have an electric generator in a nacelle on top of a tower, where a rotor with a substantially horizontal axis mounted to the nacelle and arranged to drive the generator. The nacelle is usually arranged to be rotated in relation to the tower, to point the rotor towards the wind.

With growing sizes of horizontal axis wind turbines, challenges in handling of components for the wind turbines, e.g. at installation or service, increase. For example, such handling may require the use of very large cranes, which may cause increased costs with an increased usage time.

EP3404259 relates to a method for assembling a wind turbine with a drive train and a nacelle, the outside of which is formed at least partially by at least one shell segment in the fully assembled state, with a partially assembled nacelle being mounted on an already erected supporting structure, comprises the following steps: The shell segment and at least one component of the drive train are attached together to a single load handling device and are lifted in a single lifting process by a hoist.

### SUMMARY OF THE INVENTION

It is an object of the present invention is to facilitate the handling of wind turbine components. It is a further object of the invention to reduce the installation time of a wind turbine component.

The objects are reached with a method according to claim 1. Thus, the invention provides a method for installing or removing components of a wind turbine. The method comprises separately fastening two or more wind turbine components to a respective receiving structure of the wind turbine, or separately releasing the components from the respective receiving structure. The method further comprises, before the fastening of the components, or subsequently to the releasing of the components, lifting the components simultaneously, so as to be carried by a lifting line of a crane. The directional inter-relationship of the components, during the lifting of the components, is substantially the same as the directional inter-relationship of the components when fastened to the respective receiving structure.

Separately fastening the components to the respective receiving structure, may comprise individually fastening the components to the respective receiving structure. Separately releasing the components from the respective receiving structure, may comprise individually releasing the components from the respective receiving structure.

Fastening the components to the respective receiving structure may provide for the components being finally installed in the wind turbine. Fastening the components to the respective receiving structure may provide for the components being secured in the wind turbine.

Lifting two or more components at the same time, will save installation time. Further, since the directional inter-relationship of the components, during the lifting of the components, is substantially the same as the directional inter-relationship of the components when fastened to the respective receiving structure, the components will be, when installed, lined up when reaching the receiving structures, as they are lined up when finally installed. Thereby, the need to move the components in relation to each other, in order to reach their respective receiving structure, may be minimised. In addition, the need to move the components in relation to each other, when removing them from the wind turbine, may be minimised. This will reduce the installation time of wind turbine components.

Preferably, the spatial inter-relationship of the components, during the lifting step, is substantially the same as the spatial inter-relationship of the components when fastened to the respective receiving structure. Thus, the position of one of the components in relation to the position(s) of the other component(s) will be substantially the same during the lifting step, as when the components are fastened to the respective receiving structure. Thereby, the components may be lifted with the spatial inter-relationship of their final installation.

Thereby, the need to move the components in relation to each other, in order to reach their respective receiving structure, or when removing them from the wind turbine, may be further minimised or even eliminated.

It should be noted that in some embodiments, as exemplified below, the distance between the components may be slightly larger or smaller during the lifting step compared to the distance between the components when fastened to the respective receiving structure. However, herein, even if there is a small such distance deviation, the spatial inter-relationship of the components, during the lifting step, is still considered to be substantially the same as the spatial inter-relationship of the components when fastened to the respective receiving structure.

The components are arranged, during the lifting of the components, one above the other. Thereby, the directional inter-relationship of the components may be that the one of the components that is above the other one, when the components are lifted, is also above the other one when the components are fastened to the respective receiving structure. Thereby, the components may be lifted in a vertical stack. Thereby, the components may be installed one on top of the other. A wind turbine may present a plurality of components installed one on top of the other. For example, components installed one on top of the other in the nacelle. By lifting the components, one on top of the other, the operating time of the crane may be reduced. Thereby, the overall installation time and cost may be reduced.

In some embodiments, fastening the components comprises fasting one of the components while the at least one other component is still carried by the lifting line. Thereby, a sequential fastening of the components is made provided. This will allow an accurate positioning of the components during installation. Also, this will allow a smooth installation procedure. Similarly, releasing the components may comprise releasing one of the components while the at least one other component is carried by the lifting line. This will allow a smooth component removal procedure.

Preferably, a lifting device is arranged to be suspended in the lifting line, the components being suspended, during the lifting of the components, individually from the lifting device. Thereby, the components could be suspended individually from the same lifting equipment. This will facilitate fasting one of the components while the at least one other component is still carried by the lifting line. Also, releasing one of the components while the at least one other component is carried by the lifting line may be facilitated by the individual suspension from the lifting device. The lifting device could be a lifting yoke. The lifting device could be a crane hook. The lifting device could be a combination of a lifting yoke and a crane hook.

Preferably, where, during the lifting step, a lower of the components is lifted below an upper of the components, the upper component presents one or more through openings. Thereby, one or more suspension lines, with which the lower component is suspended from the lifting device, may extend through a respective of the one or more through openings. Thereby, individual suspension of the components is facilitated, even if the upper component is interposed between the lower component and the lifting device.

Preferably, where, during the lifting step, a lower of the components is lifted below an upper of the components, the vertical distance between the lower and upper components is larger or smaller during the lifting step, than when fastened to the respective receiving structure. Preferably, during fastening or releasing of the lower component, to or from the receiving structure for the lower component, the upper component is above a position which the upper component has when the upper component is fastened to the receiving structure for the upper component.

This is particularly advantageous when a lifting device is arranged to be suspended in the lifting line, and the components are suspended, during the lifting step, individually from the lifting device. Where the vertical distance between the components is larger during the lifting step, than when finally installed, the lower component may be fasted to its receiving structure, while the upper component is still suspended from the lifting line. The shorter distance may be accomplished by suspension lines between the upper component and the lifting device, e.g. the lifting yoke, being shorter than needed to provide exactly the same inter-component distance as when the components are finally installed. When the lower component is fastened, the suspended upper component may be easily manipulated to be correctly positioned for being fastened to its receiving structure. When the lower component is fixed, the upper component may be lowered to its receiving structure. This allows for an accurate and smooth installation procedure.

Similarly, during component removal, the upper component may be released from its receiving structure, while the lower component is still fixed to its receiving structure. Subsequently, the upper component may be lifted, and allow to be suspended from the lifting line, while the lower component is released from it receiving structure. This allows for a smooth component removal procedure.

It should be noted that where the vertical distance between the components is smaller during the lifting step, than when the components are finally installed, the upper component may be fasted to its receiving structure, while the lower component is still suspended from the lifting line.

According to the invention, during the lifting step, a lower of the components is lifted below an upper of the components, and the lower component is suspended from the crane lifting line, e.g. via a lifting device such as a lifting yoke, the upper component is at least partly supported on the lower component. Thereby, the upper component is at least partly supported on the lower component via at least one support element. The support element may be provided in any suitable form, e.g. a leg, or some other form of distance device. Thus, the upper component rests, at least partly, on the first component. In some embodiments, the lower component supports the full weight of the upper component, so that the upper component may rest fully on lower component. In other embodiments, a part of the weight of the upper component may be carried by suspension lines extending from the upper component to a lifting device carried by the lifting line. Thereby, a safe environment may be provided for staff working under the upper component, before the latter is fastened, e.g. while fastening the lower component.

Where the upper component is at least partly supported on the lower component, the components could be removed as follows: The upper component may be lifted, e.g. by suspension lines to a lifting device carried by the lifting line. Subsequently, the one or more support elements may be placed on the lower component. Subsequently, the upper component may be lowered, so as to rest on the support element(s). Subsequently, the lower component may be lifted, suspended from the crane lifting line, while the upper component is supported on the lower component.

A first of the components may be a main component adapted to be housed in a nacelle of the wind turbine. The wind turbine main component may be a generator, a transformer, an electrical cabinet, a drivetrain component, or a combination thereof. The drivetrain component may be a gearbox, a rotor shaft, a main bearing housing, or any combination thereof. In some embodiments, the first component may be an assembled drivetrain for the wind turbine. The drivetrain may include a rotor shaft, a main bearing housing, and a gearbox. A second of the components may be a roof element of the nacelle or a part of the roof of a nacelle. The roof may be a canopy, a roof section, a covering panel, or a hatch for the nacelle of the wind turbine. The roof element may be lifted above the main component. Thereby, a particular advantage is obtained in certain wind turbine component removal and installation procedures. When removing and/or installing the main component, the nacelle roof element may be removed to access the main component from above. Removing the roof element first, and lowering it to the ground, and subsequently removing the main component, requires a relatively large amount of time, and therefore cost. Embodiments of the invention provides for lifting the roof element together with the main component, thereby saving time. In addition, since the roof element may be lifted above the main component, they are lifted with the same directional inter-relationship as they have when installed. Thereby, the components do not need to be moved to any substantial degree, in the wind turbine, before or after the lifting step.

Also, where the roof element (also herein called roof covering device) is lifted above the main component, the main component may obtain an increased protection against weather elements, during an installation or removal process. For example, embodiments of the invention allows for the nacelle to be closed immediately, or shortly, after the main component has been installed. This will reduce the risk of the main component being damaged by rain or snow entering the nacelle before the roof covering device has been installed.

Preferably, an area to mass ratio of a first of the components is less than 40% of an area to mass ratio of a second of the components. Preferably, the area to mass ratio of the first component is less than 25%, more preferably less than 15%, for example approximately 10%, of the area to mass ratio of the second component. Each area to mass ratio may be a maximum area of a two-dimensional projection of the respective component, divided by the mass of the respective component. Where the second component is relatively light, and has relatively large dimensions, a lifting operation with the second component alone may be difficult, e.g. due to wind gusts moving the component. This may form a safety issue. By lifting the second component together with the first component, which has an area to mass ratio of less than 40% of the area to mass ratio of the second component, the second component may be stabilised by the first component, during the lifting step. Thereby, the lifting operation may be improved. The second component may be lifted above the first component. The first component may thereby service to stabilise, or anchor, the second component. Thereby, safety may be increased.

### BRIEF DESCRIPTION OF THE DRAWINGS

Below, embodiments of the invention will be described with reference to the drawings, in which
- fig. 1 shows a perspective view of a wind turbine,
- fig. 2 shows a cross-sectional view of a nacelle of the wind turbine in fig. 1,
- fig. 3 shows a perspective view of a crane for installing or removing components of the wind turbine in fig. 1,
- fig. 4 - fig. 7 show perspective views of components when handled by the crane in fig. 3,
- fig. 8 is a block diagram depicting steps in a method according to an embodiment of the invention, for installing the components in fig. 4 - fig. 7, and
- fig. 9 shows a perspective view of components when handled, according to an alternative embodiment of the invention, by the crane in fig. 3.
- Fig. 10 shows an illustrative view of a support element according to parts of this invention.

### DETAILED DESCRIPTION OF EMBODIMENTS

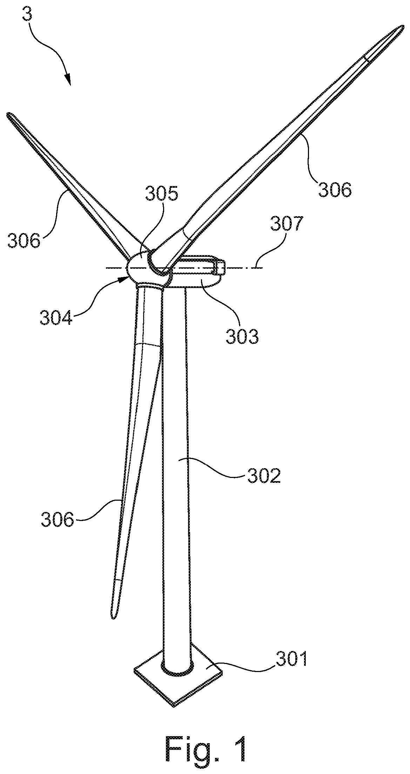

Reference is made to fig. 1. A wind turbine 3 may include a foundation 301, and a tower 302 coupled to the foundation 301 at a lower end thereof. A nacelle 303 may be disposed at the apex of the tower 302. A rotor 304 may be operatively coupled to a generator housed inside the nacelle 303. The rotor 304 of the wind turbine 3 may serve as the prime mover for a electromechanical system of the wind turbine. In addition to the generator, the nacelle 303 may house miscellaneous components required for converting wind energy into electrical energy. The nacelle 303 may also house various components needed to operate, control, and optimize the performance of the wind turbine 3. While an on-shore wind turbine 3 is illustrated in fig. 1, it should be recognised that aspects of the present invention may also be used for off-shore wind turbines as well. The rotor 304 of wind turbine 3 may include a central hub 305 and at least one blade 306 that projects outwardly from the central hub 305. In the representative embodiment, the rotor 304 includes three blades 306, but the number may vary. The wind turbine may be a horizontal-axis wind turbine. The blades 306 may be configured to interact with the passing air flow to produce lift that causes the rotor 304 to rotate about a substantially horizontal axis 307.

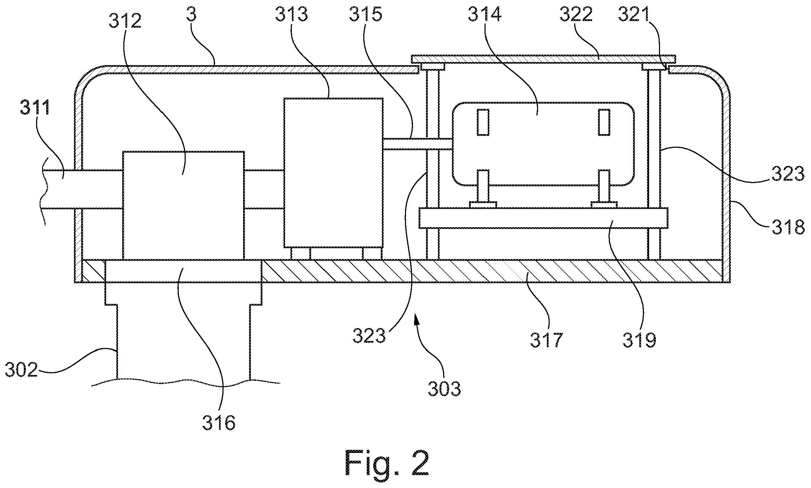

Fig. 2 shows a cross-section of the nacelle 303. A rotor shaft 311 may be supported by two or more bearings in a shaft housing 312, herein also referred to as a main bearing housing. The rotor shaft 311 may be arranged to connect the rotor 304 to a gearbox 313. The generator 314 may be connected to the gearbox 313 via a high speed shaft 315.

The nacelle may be connected to the tower 302 via a yaw system. The yaw system may include a yaw bearing 316. The shaft housing 312 may be mounted on top of the yaw bearing 316.

The nacelle 303 may comprise a lower nacelle structure 317. The lower nacelle structure may be fixed to the shaft housing 312. The lower nacelle structure 317 may support the gearbox 313. Thereby, the lower nacelle structure 317 may form what is herein referred to as a receiving structure for the gearbox 313.

A generator support structure 319 may be arranged to support the generator 314. Thereby, the generator support structure 319 may form what is herein referred to as a receiving structure for the generator 314. The generator support structure 319 may be supported by the lower nacelle structure 317.

The nacelle 303 may comprise a shell 318. The shell 318 may enclose the components in the nacelle. On a top side of the nacelle 303, the shell 318 may present an opening 321. In this example, the opening is located above the generator 314. The size of the opening 321 may be adapted to lifting the generator 314 though the opening. The nacelle may further comprise a covering panel 322, adapted to cover the opening 321. A plurality of posts 323 may form a receiving structure for the covering panel 322. The posts 323 may be supported by the generator support structure 319. In this example, the receiving structure for the covering panel 322 comprises four posts 323.

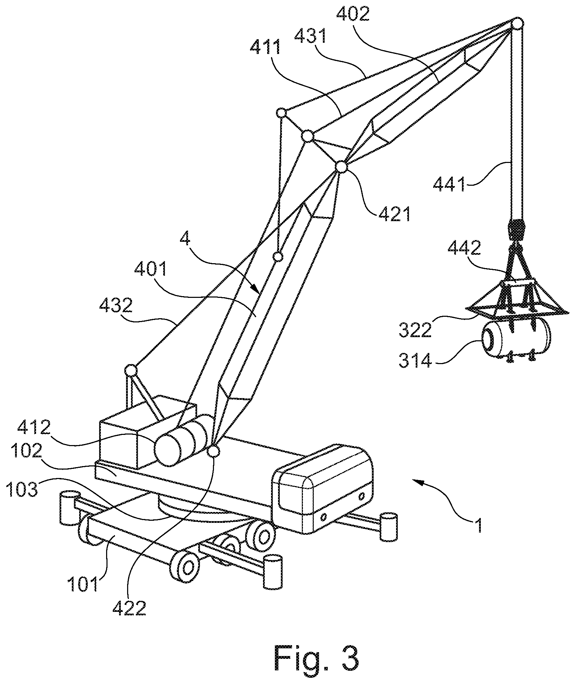

Fig. 3 shows a crane 1. The crane may comprise a lifting line 441. A lifting device, e.g. a yoke 442, may be suspended from the lifting line 441. The crane might be used for installing or removing components of the wind turbine 3.

The crane may comprise an undercarriage 101. The undercarriage may be arranged to be supported by the ground. The crane may be a mobile crane. The crane may comprise an over carriage 102. The over carriage 102 may be arranged over the under carriage 101. The over carriage 102 may be connected to the undercarriage 101 via a slewing bearing 103. The over carriage 102 may be arranged to rotate, around a substantially vertical axis, in relation to the undercarriage 101, by means of the slewing bearing 103.

The crane may comprise an elongated boom assembly 4. The boom assembly may be mounted on the over carriage 102. The boom assembly may comprise one or more boom segments 401, 402. The boom assembly may comprise a first boom segment 401, and a second boom segment 402, as exemplified in fig. 3. The first boom segment may form a main boom 401. The second boom segment may form a jib 402. A lower end of the second boom segment 402 may be, in an erected condition of the boom assembly, connected to an upper end of the first boom segment 401. The second boom segment lower end may be connected to the first boom segment upper via a flexible segment joint 421. This may allow luffing of the second boom segment in relation to the first boom segment. Luffing may be performed by means of a jib guy line 431. The boom assembly 4 may be connected to the over carriage 102 via an assembly joint 422. More specifically, a lower end of the first boom segment 401 may be connected to the over carriage 102 via the assembly joint 422. This may allow luffing of the first boom segment 401 in relation to the over carriage 102. Such luffing may be performed by means of a boom guy line 432.

The crane may be adapted to keep a load 314, 322 suspended from the boom assembly. In this example, the load comprises a plurality of components for the wind turbine. More specifically, in this example, the load comprises the generator 314 and the covering panel 322, as exemplified further below. The load 314, 322 may be suspended from the lifting device 442. The crane 1 may be adapted to keep the load 314, 322 suspended from the second boom segment 402. The crane may be adapted to keep the load suspended from an upper end of the second boom segment 402. The crane may be adapted to carry the load 314, 322 by means of the lifting line 441. The height of the load 2 may be controlled by a winding drum 412. The winding drum 412 may be provided on the over carriage 102. Thus, the winding drum 412 may be arranged to reel the lifting wire 411 in or out.

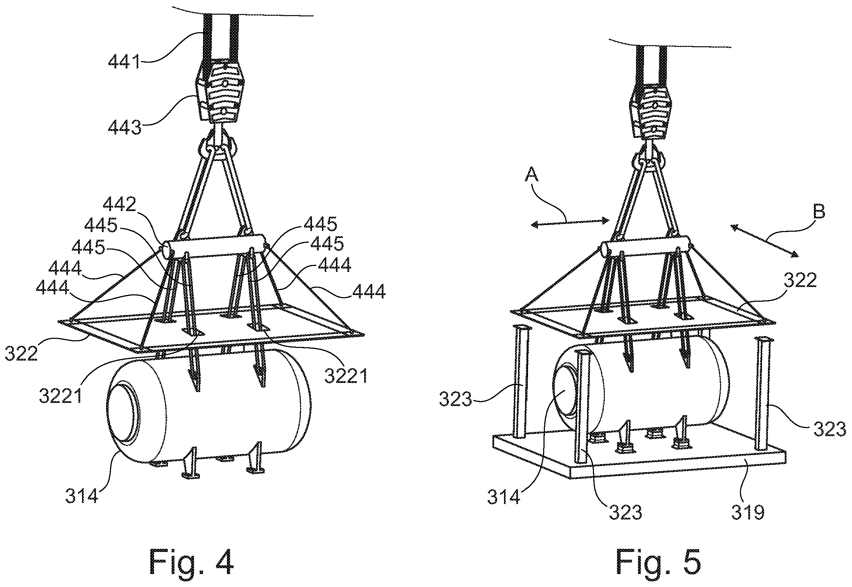

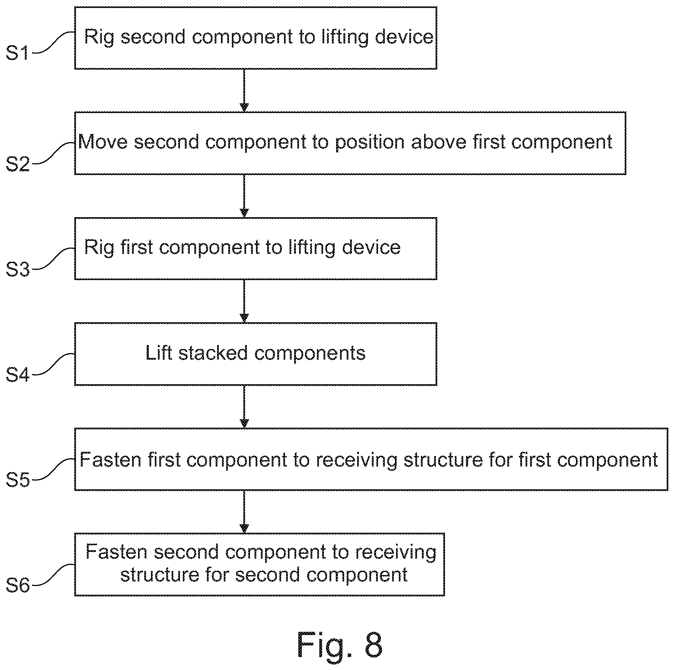

With reference to fig. 4 - fig. 8, an embodiment of a method according to the invention, for installing wind turbine components, will be described.

The components 314, 322 may be placed on the ground. The lifting device 442 may be arranged to be suspended from a crane hook 443, for example as depicted in fig. 4. The components in this example are the generator 314, and the covering panel 322. The components are here also referred to as a first and a second component 314, 322. The components are arranged so as to be suspended, during the lifting of the components, individually from the lifting device 442. The components may be arranged, during the lifting of the components, one on top of the other. For this, the second component 322 may be arranged to be suspended from the lifting device 442 by means of one or more second component suspension lines 444, as exemplified in fig. 4. The second component suspension lines 444 may be slings, ropes, chains, or any other suitable type of lines. Thereby, the second component 314 may be rigged S1 to the lifting device 442 by means of one or more second component suspension lines 444.

The second component may be the covering panel 322. The covering panel may present a rectangular shape. Each of the second component suspension lines 444, in this example four of them, may extend from a respective corner of the covering panel 322 to the lifting device 442. The lifting device may be provided as an elongated, horizontal boom. Two of the second component suspension lines 444 may be connected to one end of the lifting device 44, and two further of the second component suspension lines 444 may be connected to the other end of the lifting device 442.

Subsequently, the second component 322 may be moved S2 by means of the crane to a position above the first component 314. Thereby, the second component 322 may be suspended from the lifting device 442 by means of the second component suspension lines 444. Subsequently, the first component 314 may be arranged to be suspended from the lifting device 442 by means of one or more first component suspension lines 445, as exemplified in fig. 4. The first component suspension lines 445 may be slings, ropes, chains, or any other suitable type of lines. Thereby, the first component 314 may be rigged S3 to the lifting device 442 by means of one or more first component suspension lines 445.

The first component may be the generator 314. Each of the first component suspension lines 445, in this example four of them, may extend from a respective fastening device, e.g. an ear, on the generator 314 to the lifting device 442. Two of the first component suspension lines 445 may be connected to one end of the lifting device 44, and two further of the first component suspension lines 445 may be connected to the other end of the lifting device 442.

Connecting the first component suspension lines 445 to the lifting device may be done while the second component 322 is positioned over the first component 314. The second component 322 may present one or more through openings 3221. Thereby, the first component suspension lines 445 may extend through a respective of the through openings 3221.

Subsequently, the stacked components 314, 322 may be lifted S4. The stacked components may be lifted to their installation position. Thereby, the components are lifted simultaneously, so as to be carried by the lifting line 441. Thereby, the directional inter-relationship of the components 314, 322, during the lifting of the components, may be substantially the same as the directional inter-relationship of the components when fastened to the respective receiving structure 319, 323 in the wind turbine, (fig. 2). More specifically, in this example, the first component 314 is lifted below the second component 322, and the first component is below the second component when the components are fastened to the respective receiving structure. The first component 314 may also be referred to as the lower component, and the second component 322 may also be referred to as the upper component. The spatial inter-relationship of the components, during the lifting of the components, may be substantially the same as the spatial inter-relationship of the components when fastened to the respective receiving structure.

In some embodiments, the crane hook 443 may form a lifting device 442. Thereby, the components may be arranged so as to be suspended, during the lifting of the components, individually from the crane hook 443.

The area to mass ratio of the first component 314, e.g. a generator, may be considerably smaller than the area to mass ration of the second component 322, e.g. a cover panel. Preferably, an area to mass ratio of the first component 314 is less than 40% of an area to mass ratio of the second component 322. Herein, each area to mass ratio is a maximum area of a two-dimensional projection of the respective component, divided by the mass of the respective component. Thereby, the first component may serve to anchor the second component during the lifting of the components, as also discussed above. Thereby, the lifting procedure may be less sensitive to wind gusts, etc., tending to disturb the second component 322, presenting a relatively high area to mass ratio.

It should be noted that each of the components 314, 322 may be connected to the lifting device 442 with any number of suitable suspension lines 444, 445, for example two, three, four, or more. In some embodiments, the crane hook 443 could form the lifting device. Thereby, the suspension lines 444, 445 could be joined in the crane hook 443. In some embodiments, the lifting device could comprise one or more master links or similar equipment. Thereby, the suspension lines could be joined to the crane hook by means of the master link(s). The master link may be a ring, for example oval in shape, for connecting a plurality of the suspension lines. The master link may allow the suspension lines to be attached to the crane hook.

It should be noted the components could be any suitable type of wind turbine components. For example, the first component may be nacelle main component, such as a gearbox, a generator, a main bearing housing, or any combination thereof. For example, the second component could be nacelle roof covering device, such as a canopy, a nacelle roof section, a covering panel, or a hatch for the wind turbine nacelle.

Subsequently, the components may be fastened to their respective receiving structure, in this example in the nacelle 303, (fig. 2). For this, the first component 314 is positioned on its receiving structure 319, for example as shown in fig. 5. Subsequently, the first component 314 is fastened S5 to the receiving structure 319 for the first component.

Preferably, the distance between components 314, 322 is larger during the lifting of the components, than when fastened to the respective receiving structure. Preferably, this difference in distance is relatively small. The difference between the distance between the components during the lifting of the components, and the distance between the components when the components are fastened to the respective receiving structure, may be at least one order of magnitude smaller than the largest extension of the components. Thereby, the spatial inter-relationship of the components, during the lifting of the components, may be substantially the same as the spatial inter-relationship of the components when fastened to the respective receiving structure.

As exemplified in fig. 5, where the distance between components 314, 322 is larger during the lifting of the components, than when fastened to the respective receiving structure 319, 323, the second component 322 may be, during fastening of the first component to the receiving structure 319 for the first component, above a position which the second component 322 has when the second component is fastened to the receiving structure 323 for the second component. Therefore, the second component 322 may be still suspended when the first component 314 is fastened, and can still be manipulated into its position on its receiving structure 323. Such manipulation is exemplified in fig. 5 by the double arrows A, and B.

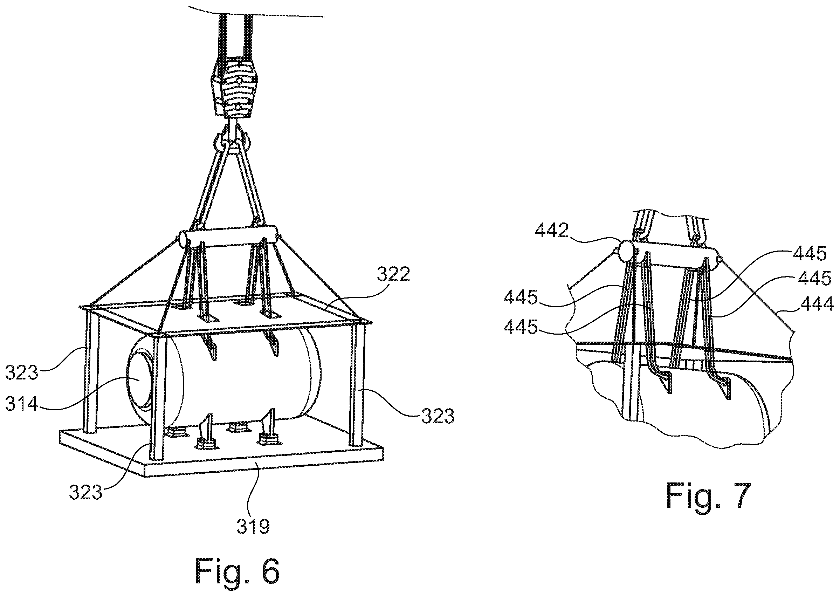

Thus, fastening the components comprises fasting one of the components while the at least one other component is still carried by the lifting line. Subsequently, the second component 322 is positioned on its receiving structure 323, for example as shown in fig. 6 and fig. 7. Thereby, the first component suspension lines 445 may be slacked, for example as shown in fig. 7. Subsequently, the second component 322 is fastened S6 to the receiving structure 323 for the second component. Subsequently, the suspension lines 444, 445 may be detached from the components. Subsequently, the suspension lines 444, 445 may follow the lifting device 442, when the latter is moved away.

In embodiments of the invention, components are removed from a wind turbine. For example, with the components and devices described with reference to fig. 1 - fig. 7, this could be done as follows:
The second component 314 may be rigged to the lifting device 442 by means of one or more second component suspension lines 444. The first component 314 may be rigged to the lifting device 442 by means of one or more first component suspension lines 445. Subsequently, the second component 322 may be released from the receiving structure 323 for the second component. Subsequently, the first component 314 may be released from the receiving structure 319 for the first component.

Subsequently, the stacked components 314, 322 may be lifted. Thereby, the components may be lifted simultaneously, to be carried by the lifting line 441, wherein the directional inter-relationship of the components, during the lifting of the components, is substantially the same as the directional inter-relationship of the components when fastened to the respective receiving structure.

Subsequently, the first component may be placed on the ground. Subsequently, the first component 314 may be released from the first component suspension lines 445, while the second component 322 is carried by the lifting line 441. Subsequently, the second component 322 may be moved by means of the crane away from the position above the first component 314. The second component may be placed on the ground. Subsequently, the second component 322 may be released from the second component suspension lines 444.

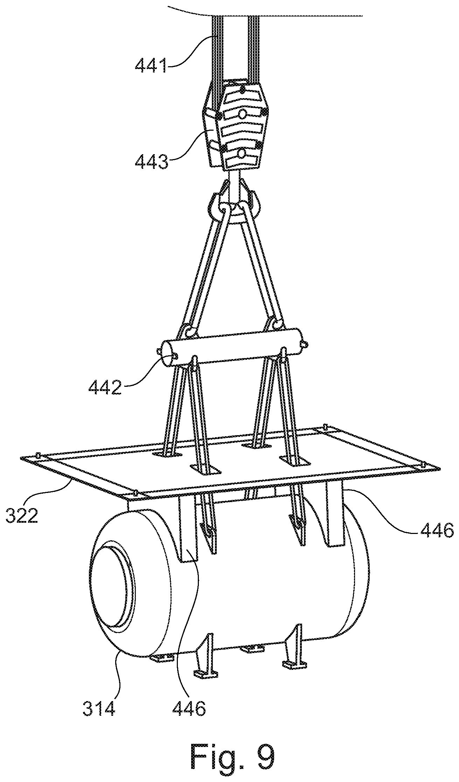

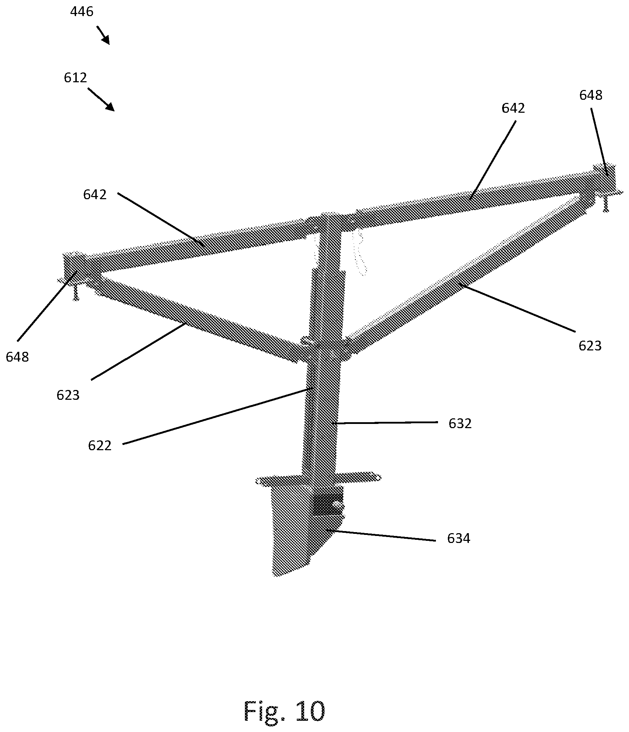

Fig. 9 depicts a further embodiment of the invention. During the lifting of the components, the upper component, i.e. the second component 322, may supported on the lower component, i.e. on the first component 314, via at least one support element 446. The support element 446 may comprise more than one support component 612, as exemplified in Figs. 9 or 10. Thereby, the lower component 314 may be suspended from the crane lifting line 441, and the upper component 322 may be supported on the lower component 314. In some embodiments, additional control of the upper component 322 may be provided by way of e.g. upper component suspension lines 444, connected between the upper component 322 and the lifting device 442, while the upper component 322 is at the same time supported on the lower component 314. Lifting lines 445 between a lifting device 442 and a lower component 314 may extend through openings 3221 in an upper component 322. In embodiments, the support element 446 may be retractable, in particular, a support component 612 of the support element 446 may be retractable. In particular, the support element 446 or support component 612 may be extendable and/or retractable. For example, a support component 612 may comprise a length adjuster 622 to extend or retract the length of a support component 612 of a support element 446, thereby increasing or decreasing the effective separation distance between the upper and the lower component 322, 314. In one embodiment, the support element 446 may comprise multiple support components 612. Preferably the support element 446 may comprise two support components 612 spaced apart, each supporting an opposite end of an upper component 322. For example, one support component 612 may be positioned on each side of a gearbox 313. A nacelle roof may be supported on top of the gearbox 313 via a pair of support components 612.

Each support component 612 may preferably be length adjustable as mentioned to allow the upper component 322 to be lowered into its final position in a controlled manner. A length adjuster 622 of a support component 612 may comprise a jack, such as e.g. a hydraulic jack or a worm-screw type jack. In one embodiment, illustrated in Fig. 10, a support component 612 comprises an upright pillar 632 extending between a lower component 314 and an upper component 322. The upright pillar 632 may in particular be removably fixed to the lower component 314. The upright pillar 632 may comprise an attachment foot 634, for removable attachment to the lower component 314. The attachment foot may be configured for direct attachment to a part of the lower component 314. The pillar 632 may thereby be directly supported on the lower component 314. In embodiments, a support shoe may be fitted to the lower component 314. The attachment foot 634 may be supported on the support shoe of the lower component.

In the embodiment of Fig. 10, the upright pillar 632 is in the form of a central column of the support component 612, and may be telescopic. In particular, the telescopic upright pillar 632 may comprise a length adjuster 622 driven by a lead screw or hydraulic piston. By way of example, a lead screw may be driven by a motor at the upright pillar 632. A lead screw drive motor may be provided at the foot 634 of a pillar 632. The upright pillar 632 may house a gear unit. The lead screw for adjusting the length of the support component 612 may be driven from the gear unit. A gear unit may be housed at the foot 634 of the upright pillar 632. A gear unit may be actuated by a drive motor in the upright pillar 634. Alternatively, an external motor may be applied to the gear unit to drive the lead screw and actuate the extension or retraction of the length adjuster 622 and thereby of the support component 612. For example, a hand drill may be used as a motor for the gear unit to actuate the jacking motion of the length adjuster 622. Alternatively, the length adjuster 622 may be hydraulic. The length adjuster may comprise a hydraulic motor. A hydraulic motor may be housed in or at the upright pillar 632. A hydraulic motor may be housed in or at the foot 634 of the upright pillar 632. The length adjuster 622 may be actuated manually or using a control switching arrangement.

Optionally, the upper component 322 may be supported on a support element 446 via a lateral adjustment element 648. In particular, the support element 446 may comprise one or more lateral adjustment elements 648 on which the upper component 322 rests during a lift. With the lower component 314 in position in the nacelle, the upper component 322 may then be brought into alignment for positioning precisely in its position. With the upper component 322 correctly aligned for positioning a length adjuster 622 at the support element 446 e.g. at a support component 612 thereof, may be actuated to retract the support component 612 thereby lowering the upper component 322 to its final position. With the upper component 322 in position e.g. on the wind turbine nacelle, the support element 446 and/or any other fastenings may be removed.

The interface between the upper component 322 and the support element 446 may include lateral adjustment elements 648 in the form of ball transfer units. These may optionally be retractable. When lateral adjustment of the position of the upper component is required, the ball transfer units may be brought into an extended position, in which these allow lateral positional adjustment of the upper component, even while keeping the upper component 322 supported on the support element 446, during positioning thereof.

In addition to an upright pillar 632, the support component 612 may include a lateral arm 642 joined to the upright pillar 632. The lateral arm 642 may provide a support for the upper component 322 on the upright pillar 632. The lateral arm 642 may extend from one lateral side of the upright pillar 632 or, preferably, it may extend away in opposite directions from the upright pillar 632. The lateral arm 642 may be a compound arm, i.e. it may be articulated, e.g. at or near a mid-point thereof. The lateral arm 642 may articulated at a joint between the lateral arm 642 and the upright pillar 632, e.g. at or near a mid-point thereof. The articulation may be a double articulation e.g. in the case of an arm 642 which extends away from the upright pillar 632 in two directions e.g. in opposite directions. The lateral arm 642 may be retractable. The lateral arm 642 may be supported on one or more buttresses 643 which extend between the lateral arm 642 and the upright pillar 632. The buttresses 643 may be movable in translation up or down the support pillar 632. The one or more buttresses 643 may be lockable in a support position at a location between an upper and a foot 634 of the upright pillar 632. Hence, the support component 612, and thereby the support element 446 may be collapsible e.g. for easy handling and storage when being assembled, dismantled, or when not in use.

Preferably, the upper and lower components 322, 324 are fastened and suspended together such that lateral movement of the upper component 322 is constrained by the effect of the suspended mass of the lower component 314. In particular, when the mass of the lower component is greater than the mass of the upper component. For example, a lateral gust of wind may tend to laterally urge the suspended upper component 322, but this effect may be counteracted or neutralised by the resistance to lateral movement of the suspended lower component 314. A resistance of the upper component 322 against lateral movement may be provided either by virtue of a support element 446 between the lower component 314 and the upper component 322 or by virtue of lifting lines 445 passing through the upper component 322.

As will be understood by those skilled in the present field of art, numerous changes and modifications may be made to the above described and other embodiments of the present invention, without departing from its scope as defined in the appending claims.

## Claims

1. A method for installing or removing components (314, 322) of a wind turbine (3), comprising separately fastening two or more wind turbine components (314, 322) to a respective receiving structure (319, 323) of the wind turbine, or separately releasing the components (314, 322) from the respective receiving structure (319, 323), which comprises, before the fastening of the components (314, 322), or subsequently to the releasing of the components, lifting the components (314, 322) simultaneously, so as to be carried by a lifting line (441) of a crane (1), wherein the directional inter-relationship of the components, during the lifting of the components (314, 322), is substantially the same as the directional inter-relationship of the components when fastened to the respective receiving structure (319, 323) and wherein, during the lifting of the components (314, 322), an upper component (322) is lifted above a lower component (314) wherein, during the lifting of the components (314, 322), a lower of the components (314) is lifted below an upper of the components (322), and the lower component is suspended from the crane lifting line (441), **characterized in that** the upper component is at least partly supported on the lower component via at least one support element (446).

2. A method according to claim 1, wherein the spatial inter-relationship of the components (314, 322), during the lifting of the components, is substantially the same as the spatial inter-relationship of the components (314, 322) when fastened to the respective receiving structure (319, 323).

3. A method according to any one of the preceding claims, wherein fastening the components (314, 322) comprises fasting one of the components (314) while the at least one other component (322) is still carried by the lifting line.

4. A method according to any one of the preceding claims, wherein releasing the components (314, 322) comprises releasing one of the components (314) while the at least one other component (322) is carried by the lifting line.

5. A method according to any one of the preceding claims, wherein a lifting device (442, 443) is arranged to be suspended in the lifting line (441), the components (314, 322) being suspended, during the lifting of the components, individually from the lifting device (442, 443).

6. A method according to any preceding claim, wherein, during the lifting of the components (314, 322), a lower of the components (314) is lifted below an upper of the components (322), the upper component presenting one or more through openings (3221), wherein one or more suspension lines (445), with which the lower component (314) is suspended from the lifting device (442, 443), extends through a respective of the one or more through openings.

7. A method according to any one of the preceding claims 1 or 3-6, wherein, during the lifting of the components (314, 322), a lower of the components (314) is lifted below an upper of the components (322), the vertical distance between the lower and upper components (314, 322) being larger or smaller during the lifting of the components, than when fastened to the respective receiving structure (319, 323).

8. A method according to claim 7, wherein, during fastening or releasing of the lower component (314), to or from the receiving structure (319) for the lower component, the upper component (322) is above a position which the upper component has when the upper component is fastened to the receiving structure (323) for the upper component.

9. A method according to claim 10, wherein said support element (446) is retractable.

10. A method according to claim 10, wherein said upper component (322) is supported on said support element (446) via a lateral adjustment element (648).

11. A method according to any one of the preceding claims, wherein an area to mass ratio of a first of the components (314) is less than 40% of an area to mass ratio of a second of the components (322).

## Patentansprüche

1. Verfahren zum Installieren oder Entfernen von Komponenten (314, 322) einer Windkraftanlage (3), das das separate Befestigen von zwei oder mehr Windkraftanlagenkomponenten (314, 322) an einer jeweiligen Aufnahmestruktur (319, 323) der Windkraftanlage oder das separate Lösen der Komponenten (314, 322) von der jeweiligen Aufnahmestruktur (319, 323) umfasst, was vor dem Befestigen der Komponenten (314, 322) oder nach dem Lösen der Komponenten das gleichzeitige Heben der Komponenten (314, 322) so umfasst, dass diese von einer Hebeleitung (441) eines Krans (1) getragen werden, wobei die Richtungsbeziehung der Komponenten zueinander während des Hebens der Komponenten (314, 322) im Wesentlichen dieselbe ist wie die Richtungsbeziehung der Komponenten zueinander, wenn diese an der jeweiligen Aufnahmestruktur (319, 323) befestigt sind, und wobei während des Hebens der Komponenten (314, 322) eine obere Komponente (322) über eine untere Komponente (314) gehoben wird, wobei während des Hebens der Komponenten (314, 322) eine untere der Komponenten (314) unter eine obere der Komponenten (322) gehoben wird und die untere Komponente an der Kranhebeleitung (441) hängt, **dadurch gekennzeichnet, dass** die obere Komponente über mindestens ein Stützelement (446) mindestens teilweise auf der unteren Komponente abgestützt ist.

2. Verfahren nach Anspruch 1, wobei die räumliche Beziehung der Komponenten (314, 322) zueinander während des Hebens der Komponenten im Wesentlichen dieselbe ist wie die räumliche Beziehung der Komponenten (314, 322) zueinander, wenn diese an der jeweiligen Aufnahmestruktur (319, 323) befestigt sind.

3. Verfahren nach einem der vorstehenden Ansprüche, wobei das Befestigen der Komponenten (314, 322) das Befestigen einer der Komponenten (314) umfasst, während die mindestens eine andere Komponente (322) noch von der Hebeleitung getragen wird.

4. Verfahren nach einem der vorstehenden Ansprüche, wobei das Lösen der Komponenten (314, 322) das Lösen einer der Komponenten (314) umfasst, während die mindestens eine andere Komponente (322) von der Hebeleitung getragen wird.

5. Verfahren nach einem der vorstehenden Ansprüche, wobei eine Hebevorrichtung (442, 443) so eingerichtet ist, dass sie in der Hebeleitung (441) hängt, wobei die Komponenten (314, 322) während des Hebens der Komponenten einzeln an der Hebevorrichtung (442, 443) hängen.

6. Verfahren nach einem vorstehenden Anspruch, wobei während des Hebens der Komponenten (314, 322) eine untere der Komponenten (314) unter eine obere der Komponenten (322) gehoben wird, wobei die obere Komponente eine oder mehrere Durchgangsöffnungen (3221) aufweist, wobei eine oder mehrere Aufhängeleitungen (445), mit denen die untere Komponente (314) an der Hebevorrichtung (442, 443) hängt, sich durch eine jeweilige der einen oder der mehreren Durchgangsöffnungen erstrecken.

7. Verfahren nach einem der vorstehenden Ansprüche 1 oder 3-6, wobei während des Hebens der Komponenten (314, 322) eine untere der Komponenten (314) unter eine obere der Komponenten (322) gehoben wird, wobei der vertikale Abstand zwischen der unteren und der oberen Komponente (314, 322) während des Hebens der Komponenten größer oder kleiner ist als wenn diese an der jeweiligen Aufnahmestruktur (319, 323) befestigt sind.

8. Verfahren nach Anspruch 7, wobei sich während des Befestigens oder Lösens der unteren Komponente (314) an oder von der Aufnahmestruktur (319) für die untere Komponente die obere Komponente (322) über einer Position befindet, die die obere Komponente aufweist, wenn die obere Komponente an der Aufnahmestruktur (323) für die obere Komponente befestigt ist.

9. Verfahren nach Anspruch 10, wobei das Stützelement (446) einziehbar ist.

10. Verfahren nach Anspruch 10, wobei die obere Komponente (322) über ein seitliches Einstellelement (648) auf dem Stützelement (446) abgestützt wird.

11. Verfahren nach einem der vorstehenden Ansprüche, wobei ein Verhältnis von Fläche zu Masse einer ersten der Komponenten (314) weniger als 40 % eines Verhältnisses von Fläche zu Masse einer zweiten der Komponenten (322) beträgt.

## Revendications

1. Procédé d'installation ou de retrait de composants (314, 322) d'une éolienne (3), comprenant la fixation séparée de deux composants (314, 322) d'éolienne, ou plus, à une structure de réception (319, 323) respective de l'éolienne, ou le détachement séparé des composants (314, 322) de la structure de réception (319, 323) respective, ce qui comprend, avant la fixation des composants (314, 322), ou après le détachement des composants, le levage simultané des composants (314, 322) afin qu'ils soient portés par un câble de levage (441) d'une grue (1), dans lequel l'interrelation directionnelle des composants, lors du levage des composants (314, 322), est sensiblement identique à l'interrelation directionnelle des composants lorsqu'ils sont fixés à la structure de réception (319, 323) respective et dans lequel, lors du levage des composants (314, 322), un composant supérieur (322) est levé au-dessus d'un composant inférieur (314) dans lequel, pendant le levage des composants (314, 322), un composant inférieur des composants (314) est levé au-dessous d'un composant supérieur des composants (322), et le composant inférieur est suspendu au câble de levage (441) de grue, **caractérisé en ce que** le composant supérieur est au moins partiellement supporté sur le composant inférieur par l'intermédiaire d'au moins un élément de support (446).

2. Procédé selon la revendication 1, dans lequel l'interrelation spatiale des composants (314, 322), pendant le levage des composants, est sensiblement la même que l'interrelation spatiale des composants (314, 322) lorsqu'ils sont fixés à la structure de réception (319, 323) respective.

3. Procédé selon l'une quelconque des revendications précédentes, dans lequel la fixation des composants (314, 322) comprend la fixation de l'un des composants (314) en même temps que le au moins un autre composant (322) est toujours porté par le câble de levage.

4. Procédé selon l'une quelconque des revendications précédentes, dans lequel le détachement des composants (314, 322) comprend le détachement de l'un des composants (314) en même temps que le au moins un autre composant (322) est porté par le câble de levage.

5. Procédé selon l'une quelconque des revendications précédentes, dans lequel un dispositif de levage (442, 443) est conçu pour être suspendu dans le câble de levage (441), les composants (314, 322) étant suspendus, pendant le levage des composants, individuellement au dispositif de levage (442, 443).

6. Procédé selon une quelconque revendication précédente, dans lequel, pendant le levage des composants (314, 322), un composant inférieur des composants (314) est levé au-dessous d'un composant supérieur des composants (322), le composant supérieur présentant une ou plusieurs ouvertures traversantes (3221), dans lequel un ou plusieurs câbles de suspension (445), avec lesquels le composant inférieur (314) est suspendu au dispositif de levage (442, 443), s'étendent à travers une respective des une ou plusieurs ouvertures traversantes.

7. Procédé selon l'une quelconque des revendications 1 ou 3-6 précédentes, dans lequel, pendant le levage des composants (314, 322), un composant inférieur des composants (314) est levé au-dessous d'un composant supérieur des composants (322), la distance verticale entre les composants inférieur et supérieur (314, 322) étant plus grande ou plus petite pendant le levage des composants que lorsqu'ils sont fixés à la structure de réception (319, 323) respective.

8. Procédé selon la revendication 7, dans lequel, pendant la fixation ou le détachement du composant inférieur (314), à ou de la structure de réception (319) pour le composant inférieur, le composant supérieur (322) est au-dessus d'une position qu'occupe le composant supérieur lorsque le composant supérieur est fixé à la structure de réception (323) pour le composant supérieur.

9. Procédé selon la revendication 10, dans lequel ledit élément de support (446) est rétractable.

10. Procédé selon la revendication 10, dans lequel ledit composant supérieur (322) est supporté sur ledit élément de support (446) par l'intermédiaire d'un élément d'ajustement latéral (648).

11. Procédé selon l'une quelconque des revendications précédentes, dans lequel un rapport surface/masse d'un premier des composants (314) est inférieur à 40 % d'un rapport surface/masse d'un second des composants (322).
